# EUROPEAN PATENT APPLICATION

(11) **EP 0 989 551 A1**
(43) Date of publication of application: **29.03.2000**
(21) Application number: 99119236.0
(22) Date of filing: 28.09.1999
(51) Int. Cl.: G11B 17/04

(54) **Cartridge transporting mechanism for disc player**

(30) Priority: 28.09.1998 JP 27310298
(71) Applicant: Pioneer Corporation, Meguro-ku, Tokyo (JP)
(72) Inventor: Shimizu, Takashi, K. K. Pioneer Corporation, Kawagoe-shi, Saitama-ken 350-0822 (JP); Takemasa, Kaoru, K. K. Pioneer Corporation, Kawagoe-shi, Saitama-ken 350-0822 (JP); Satoh, Takashi, K. K. Pioneer Corporation, Kawagoe-shi, Saitama-ken 350-0822 (JP)
(74) Representative: Bohnenberger, Johannes, Dr.

(57) **Abstract**

A cartridge transporting mechanism (10) for use in an information recording/reproducing apparatus. Such cartridge transporting mechanism (10) is adapted to transport a cartridge (1) accommodating an information recording medium from a cartridge insertion opening of the apparatus to a recording/reproducing position within the apparatus. The cartridge transporting mechanism (10) comprises: a cartridge holder (24) for carrying the cartridge (1) and for moving between the cartridge insertion opening and the recording/reproducing position; a roller (23) capable of rotating in a predetermined direction in contact with the cartridge (1), so as to move the cartridge (1) from the cartridge insertion opening to the cartridge holder (24); and a cartridge holder (24) moving mechanism for moving the cartridge holder (24) between the cartridge insertion opening and the recording/reproducing position. The cartridge holder (24) moving mechanism is adapted to move the cartridge holder (24) with the cartridge (1) thereon to a first position which is slightly apart from the recording/reproducing position, and then to a second position which is the recording/reproducing position.

## Description

### BACKGROUND OF THE INVENTION

The present invention relates to a cartridge transporting mechanism for use in a disc player such as an MD (Mini Disc) player or an MOD (Magneto Optical Disc) player.

Japanese Unexamined Patent Publication No. 8-315481 has disclosed a disc player having a cartridge for accommodating a recording/reproducing medium such as an MD or MOD.

With the above conventional disc player, when a cartridge is inserted into an opening formed on the disc player, the cartridge transporting mechanism will automatically effect the starting of a disc loading operation, so that the cartridge may be received into a cartridge holder and be horizontally moved to a predetermined position within the disc player. Subsequently, the cartridge is clamped at a recording/reproducing position so that recorded data may be reproduced from the disc or new data may be recorded therein.

In detail, the above cartridge transporting mechanism has a rotating roller which is capable of getting in contact with an edge portion of a cartridge. The rotating roller is driven by a driving motor, thereby enabling the cartridge to be horizontally moved to a predetermined position within the disc player.

However, since there is only a small contact area for the rotating roller to contact the edge portion of a cartridge, the rotating roller is easy to be worn away, resulting in a problem that the roller will slip away from said edge portion, hence making it difficult to transport the cartridge in a stabilized manner.

In this manner, the performance of the cartridge transporting mechanism will become worse with the passing of time, making it impossible for the cartridge to be inserted and positioned properly into a predetermined recording/reproducing position within a disc player. As a result, it is likely that the disc cartridge will be clamped in an inclined position, and hence that a clamping area on the center of a disc will be deviated from the center of a turntable within the disc player, making the disc to become inclined in the cartridge case. Consequently, the information surface of the disc will undesirably get in contact with the internal surface of the cartridge case, thus damaging the disc during an information recording or reproducing process.

### SUMMARY OF THE INVENTION

It is an object of the present invention to provide an improved cartridge transporting mechanism for use in a disc player, which is capable of moving a cartridge to a predetermined recording/reproducing position within a disc player, in a wore stable manner and with a higher precision, so as to solve the above-mentioned problems peculiar to the above-discussed prior art.

According to the present invention, there is provided a cartridge transporting mechanism for use in an information recording/reproducing apparatus. Such cartridge transporting mechanism is adapted to transport a cartridge accommodating an information recording medium from a cartridge insertion opening of the apparatus to a recording/reproducing position within the apparatus. The cartridge transporting mechanism comprises: a cartridge holder for carrying the cartridge and for moving between the cartridge insertion opening and the recording/reproducing position; a roller means capable of rotating in a predetermined direction in contact with the cartridge, so as to move the cartridge from the cartridge insertion opening to the cartridge holder; and a cartridge holder moving mechanism for moving the cartridge holder between the cartridge insertion opening and the recording/reproducing position. The cartridge holder moving mechanism is adapted to move the cartridge holder with the cartridge thereon to a first position which is slightly apart from the recording/reproducing position, and then to a second position which is the recording/reproducing position.

In one aspect of the present invention, the cartridge holder moving mechanism is adapted to move the cartridge holder with the cartridge thereon in a direction away from the roller means.

In another aspect of the present invention, the roller begins to rotate at a time the cartridge gets to the cartridge insertion opening, and stops its rotation at a time the cartridge holder with the cartridge thereon arrives at the recording/reproducing position.

In a further aspect of the present invention, a single one driving source is employed to effect both the rotation of the roller means and the movement of the cartridge holder to the first position which is slightly apart from the recording/reproducing position;

In a still further aspect of the present invention, the cartridge is provided with a shutter means for partially exposing the recording/reproducing medium, the roller means is adapted to contact the cartridge except said shutter means.

In one more aspect of the present invention, the cartridge holder moving mechanism comprises: a steering structure including a first arm and a second arm, said second arm having an inclined guide hole; a fixed side plate having an L-shaped guide hole including a first elongate hole arranged in the cartridge insertion direction and a second elongate hole arranged in a direction perpendicular to the cartridge insertion direction; an engaging projection formed on the cartridge holder, capable of engaging into the inclined guide hole and the L-shaped guide hole; a rack member adapted to move the steering structure in the cartridge insertion direction. When the steering structure is moved in the cartridge insertion direction, there will be a relative displacement between the inclined guide hole and the L-shaped hole, causing a movement of the engaging projection, thereby enabling the cartridge holder with the cartridge thereon to move between the cartridge insertion opening and the recording/reproducing position.

The above objects and features of the present invention will become better understood from the following description with reference to the accompanying drawings.

### BRIEF DESCRIPTION OF DRAWINGS

Fig. 1 is a plane view indicating a cartridge transporting mechanism made according to one embodiment of the present invention.
Figs. 2A - 2C are views indicating a cartridge holder and a steering structure, all for use in the cartridge transporting mechanism of Fig. 1.
Figs. 3A - 3E are side views indicating the cartridge holder, the steering structure, a side plate, a rack member, all for use in the cartridge transporting mechanism of Fig. 1.
Fig. 4 is a side view indicating a holder transporting mechanism for use in the cartridge transporting mechanism of Fig. 1.
Figs. 5A and 5B are views indicating an operation of the cartridge transporting mechanism of Fig. 1.
Figs. 6A and 6B are views indicating an operation of the cartridge transporting mechanism of Fig. 1.
Figs. 7A and 7B are views indicating an operation of the cartridge transporting mechanism of Fig. 1.
Figs. 8A and 8B are views indicating an operation of the cartridge transporting mechanism of Fig. 1.
Figs. 9A and 9B are views indicating an MD cartridge.

### DETAILED DESCRIPTION OF THE PREFERRED EMBODIMENTS

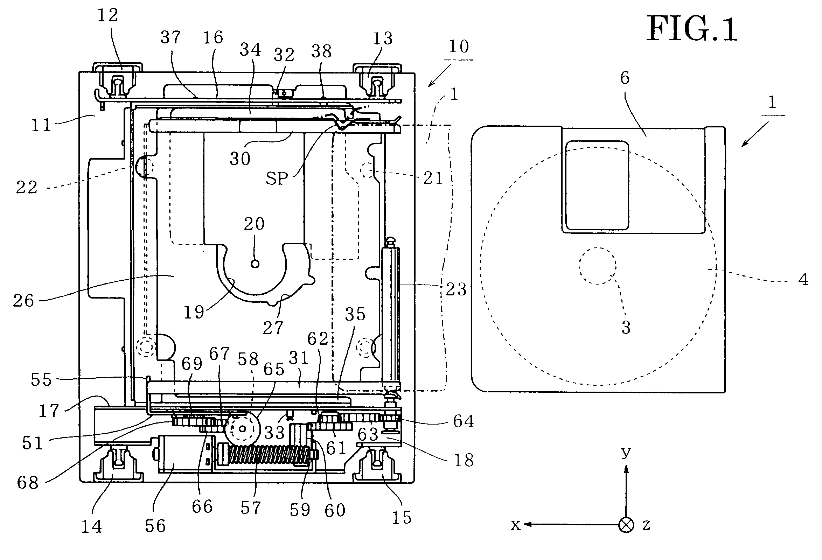

A cartridge transporting mechanism made according to one embodiment of the present invention will be described in the following with reference to Figs. 1 - 9.

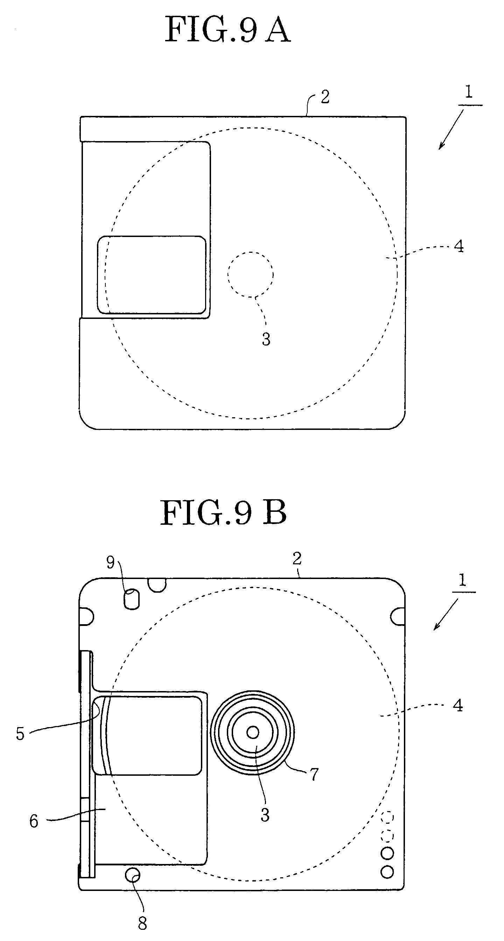

At first, referring to Fig. 9, an explanation will be given to a cartridge 1 which is used for accommodating an MD (Mini Disc). Fig. 9A is a front view of the cartridge and Fig. 9B is a back view thereof. As shown in Figs. 9A and 9B, the MD cartridge 1 includes a cartridge case 2 adapted to accommodate an MD supported on a circular clamping area 3. On the back surface of the cartridge case 2, there is formed a rectangular opening 5 for partially exposing the MD when data recorded therein is to be reproduced or new data is to be recorded thereinto. A rectangular sliding shutter 6 is provided to cover the rectangular opening 5 to protect the MD when it is not in a process of reproducing or recording. Further, a support hole 7 is formed on the back surface of the cartridge case 2 for rotatably supporting the circular clamping area 3 of the MD. In addition, two positioning holes 8 and 9 are formed on the back surface of the cartridge case 2 for positioning the MD cartridge 1 in a predetermined position within the MD player.

Now, reference is made to Fig. 1 which is a plan view indicating in detail the structure of a cartridge transporting mechanism 10 made according to the present embodiment of the present invention. As shown in Fig. 1, the cartridge transporting mechanism 10 has a generally rectangular frame structure 11. Fixing elements 12 - 15 each having a vibration proof structure are attached at the four corners on the back surface of the frame structure 11.

In detail, a first side plate 16 is fixed on the fixing elements 12 and 13, a support member 18 having a second side plate 17 is fixed on the fixing elements 14 and 15. In this way, the first side plate 16 and the second side plate 17 are mutually parallelly arranged in a direction x, as shown in Fig. 1.

On the back surface of the frame structure 11 there is formed a through hole 19 so that a magnetic head (not shown) for reproducing and recording information and a turn table (not shown) for rotatably supporting the clamping area 3 of the MD, may be exposed upwardly. Here, a reference numeral 20 is used to represent a center of the turn table.

Two projections 21 and 22 capable of engaging in the positioning holes 8 and 9 of the MD cartridge 1 are formed on the back surface of the frame structure 11.

On one side of the frame structure 11 there is provided a rod-like roller 23 extending from the second side plate 17 until half-way between the first and second side plates 16, 17. In detail, the rod-like roller 23 is arranged perpendicular to both the first side plate 16 and the second side plate 17. In more detail, the rod-like roller 23 is formed by a metal shaft covered with a hard rubber layer, with both ends of the metal shaft being freely rotatable. In this way, the rod-like roller 23 is provided close to the second side plate 17 and has a length so designed that it will not get in contact with the sliding shutter 6 when the MD cartridge 1 is being transported therethrough.

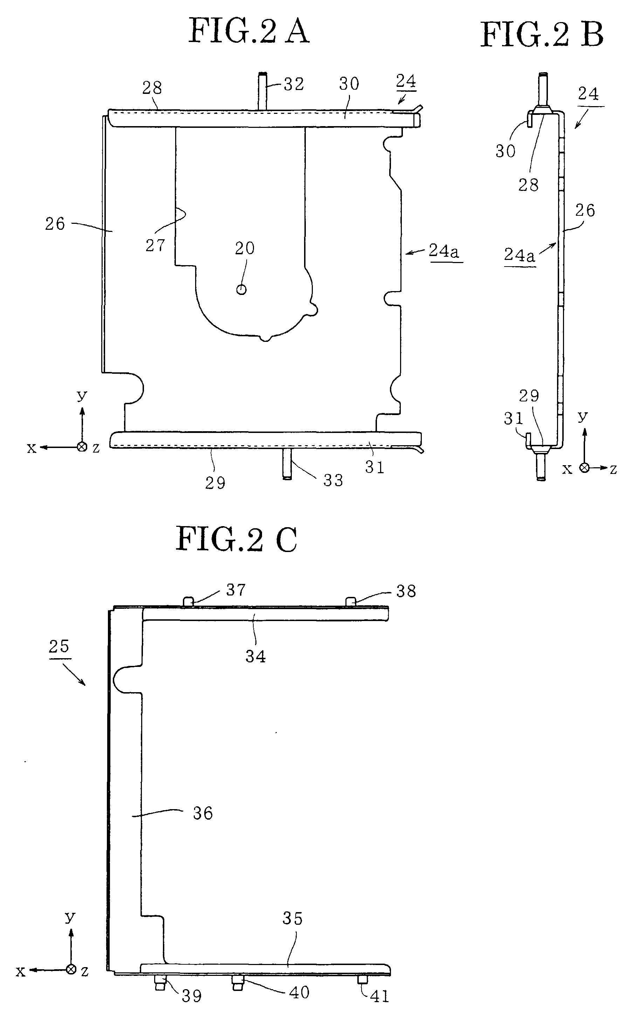

Referring to Fig. 2A, above the frame structure 11 and between the first and second side plates 16, 17, there is provided a cartridge holder 24. Further, a steering structure 25 shown in Fig. 2C is provided on the outside of the cartridge holder 24 but between the first and second side plates 16, 17.

A through hole 27 is formed on the bottom wall 26 of the cartridge holder 24 in a manner such that the through hole 27 may get aligned with the through hole 19 of the frame structure 11 so as to expose the turn table. Further, side walls 28 and 29 each having a predetermined height are formed on both sides of the bottom wall 26. In detail, the side walls 28 and 29 are integrally formed with tail portions 30 and 31, respectively. Moreover, projections 32 and 33 are formed on the side walls 28 and 29, both protruding outwardly in y direction (Fig. 2A). In addition, a leaf spring SP (Fig. 1) capable of flexibly engaging the shutter 6 of the MD cartridge 1 is provided on the side wall 28. In this way, the shutter 6 will be opened corresponding to an insertion movement of the MD cartridge 1 into the disc player.

As shown in Fig. 1, the MD cartridge 1 may be inserted inwardly from the rod-like roller 23 side, so as to be horizontally inserted into an internal space 24a defined by side walls 28, 29 and the tail portions 30, 31. In detail, the MD cartridge 1 is inserted with its back surface facing the rod-like roller 23.

The steering structure 25, as shown in Fig. 2C, comprises a first arm 34 to be disposed between the first side plate 16 and the side wall 28 of the cartridge holder 24, a second arm 35 to be disposed between the second side plate 17 and the side wall 29 of the cartridge holder 24, and a connecting plate 36 for connecting the first arm 34 and the second arm 35. Further, a plurality of projections 37, 38, 39, 40 and 41 are formed, protruding outwardly from the first and second arms 34 and 35.

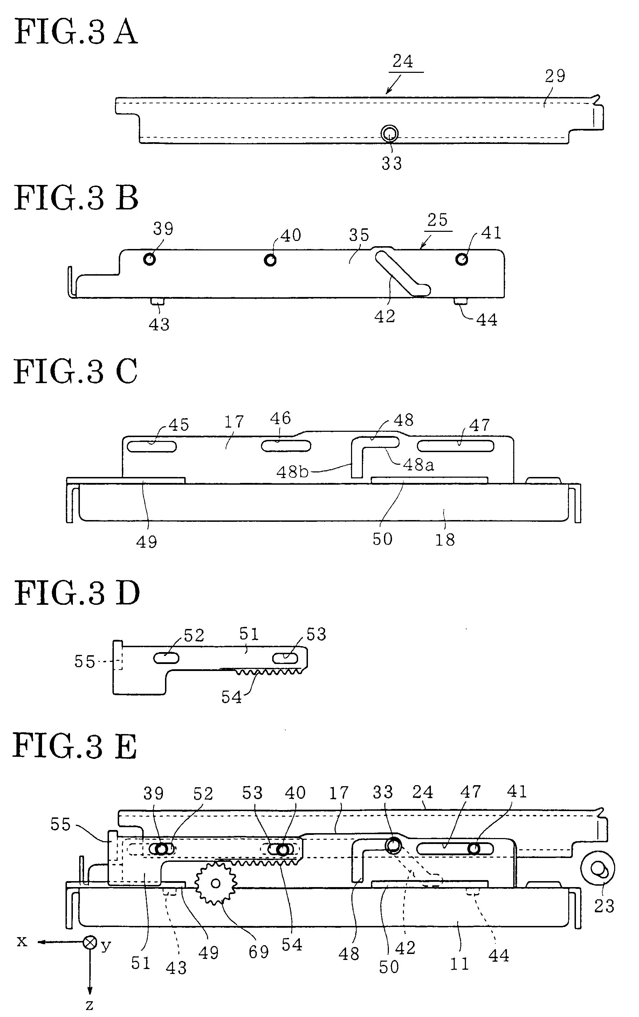

Further, as shown in Fig. 3B, on the second arm 35 of the steering structure 25, besides the projections 39, 40 and 41, there are further formed a pair of projections 43 and 44. In addition, an inclined guide hole 42 is formed on the arm 35.

Further, as shown in Fig. 3C, on the second side plate 17, there are formed elongated engaging holes 45, 46 and 47 arranged in X direction, and an L-shaped guide hole 48. The support member 18 is provided with two guide members 49 and 50, both of which are capable of engaging with the projections 43 and 44 and capable of guiding the steering structure 25 in x direction.

The projections 39, 40 and 41 of the second arm 35 are allowed to engage in the elongated engaging holes 45, 46 and 47. Further, the engaging projection 33 (Figs. 2A and 3A) of the cartridge holder 24 is allowed to engage in both the inclined hole 42 of the second arm 35 and the L-shaped guide bole 48 of the second side plate 17. In this way, the cartridge holder 24 and the second arm 35 of the steering structure 25 are allowed to be attached to the second side plate 17.

Here, the L-shaped guide hole 48 includes a first elongate hole 48a having a predetermined length permitting the engaging projection 33 to move in x direction, and a second elongate hole 48b having a predetermined length permitting the engaging projection 33 to move in z direction. In more detail, the length of the elongate hole 48a arranged in x direction is sufficient to allow the cartridge holder 24 to move toward a predetermined recording/reproducing position, the length of the elongate hole 48b arranged in z direction is sufficient to allow the cartridge holder 24 to be clamped to a predetermined recording/reproducing position. On the other hand, the inclining angle and the length of the inclined guide hole 42 are so designed that the engaging projection 33 can move in both the elongate holes 48a and 48b when the second arm 35 and the second side plate 17 are attached together.

Since the engaging projection 33 is engaged in both the inclined guide hole 42 and the L-shaped guide hole 48, when the engaging projection 33 is in the elongate hole 48a, once the steering structure 25 is moved back and forth in x direction, the engaging projection 33 will also be moved in x direction while being guided or restricted by the elongate hole 48a. On the other hand, when the engaging projection 33 is in the elongate hole 48b, once the steering structure 25 is moved hack and forth in x direction, the engaging projection 33 will be caused to move in z direction due to a fact that the elongate hole 48b and the inclined guide hole 42 are attached together.

The engaging holes 45, 46 and 47 are formed to allow engagement by the engaging projections 39, 40 and 41, and have sufficient lengths so that the steering structure 25 is allowed to move in x direction coverring a distance equal to the length of the elongate hole 48a.

Further, although not shown in the drawings, on the first arm 34 of the steering structure 25 there is also formed an inclined guide hole similar to the inclined guide hole 42 on the second arm 35. Moreover, in the first side plate 16 there are also formed several engaging holes and an L-shaped guide hole, similar to the engaging holes 45, 46, 47 and the L-shaped guide hole 48 on the second side plate 17. In this way, by causing the engaging projections 32, 37, 38 to be engaged in the engaging holes and the inclined guide hole on the first side plate 16 and the first arm 34, the cartridge holder 24 and the first arm 34 of the steering structure 25 may be attached to the first side plate 16. As a result, when the steering structure 25 is moved in x direction, the cartridge holder 24 may be moved in a smooth and stable manner without any tilting or clatterring.

Further, on the outside of the second side plate 17, there is provided a rack member 51 shown in Fig. 3D. Such rack member 51 has elongate holes 52, 53 and is formed with a rack portion 54 on one side thereof. In detail, the rack member 51 has an engaging portion 55 engageable on the inner side of the cartridge holder 24. By causing the engaging projections 39, 40 to be engaged in the elongate holes 52 and 53, the rack member 51 may be attached on the outside of the second side plate 17. Nevertheless, the elongate holes 52 and 53 each has a length so designed that a distance between the rack portion 54 and a gear 69 (which will be described in detail later) will become the largest.

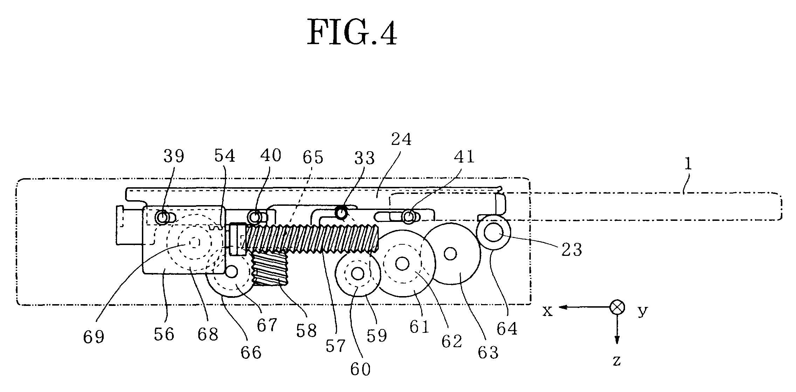

Next, a cartridge holder moving mechanism for loading and unloading the cartridge 1 will be described in the following with reference to Fig. 1 and Fig. 4.

The holder transporting mechanism is supported by the support member 18, and includes a driving motor 56, a worm gear 57, a worm gear 58 arranged perpendicular to the worm gear 57. The holder transporting mechanism further includes gears 59 - 69. In detail, the worm gear 57 is integrally connected with a driving shaft of the driving motor 56. A gear 59 is engaged with the worm gear 57. A small gear 60 integrally formed with the gear 59 is engaged with a gear 61. A small gear 62 integrally formed with the gear 61 is engaged with a gear 63 which is in turn engaged with a gear 64 secured with a rotating shaft of the rod-like roller 23.

Further, as shown in Fig 1 and Fig. 4, a gear 65 is engaged with the worm gear 57, the worm gear 58 integrally formed with the gear 65 is engaged with a gear 66. Moreover, a gear 68 is engaged with a small gear 67 integrally formed with the gear 66. A small gear 69 integrally formed with the gear 68, as shown in Fig. 3E, will be located at a position which is separated farthest from the rack portion 54, under a condition when the rack member 51 is moved to the rightmost position, guided and restricted by the elongated holes 52 and 53.

The operation of the cartridge holder moving mechanism may be described in the following. Namely, when the worm gear 57 is driven by the driving motor 56, the gears 59 - 64 will all be driven by virtue of the above gear arrangement, thereby causing the rod-like roller 23 to rotate in the forward direction. Meanwhile, through the gear 65 engaged with the worm gear 57, the worm gear 58 and the gears 66 - 69 are driven, thereby causing the gear 69 to rotate in the forward direction. On the other hand, if the worm gear 57 is driven in the adverse direction by virtue of a driving force from the motor 56, both the rod-like roller 23 and the gear 69 will also be rotated in the adverse direction.

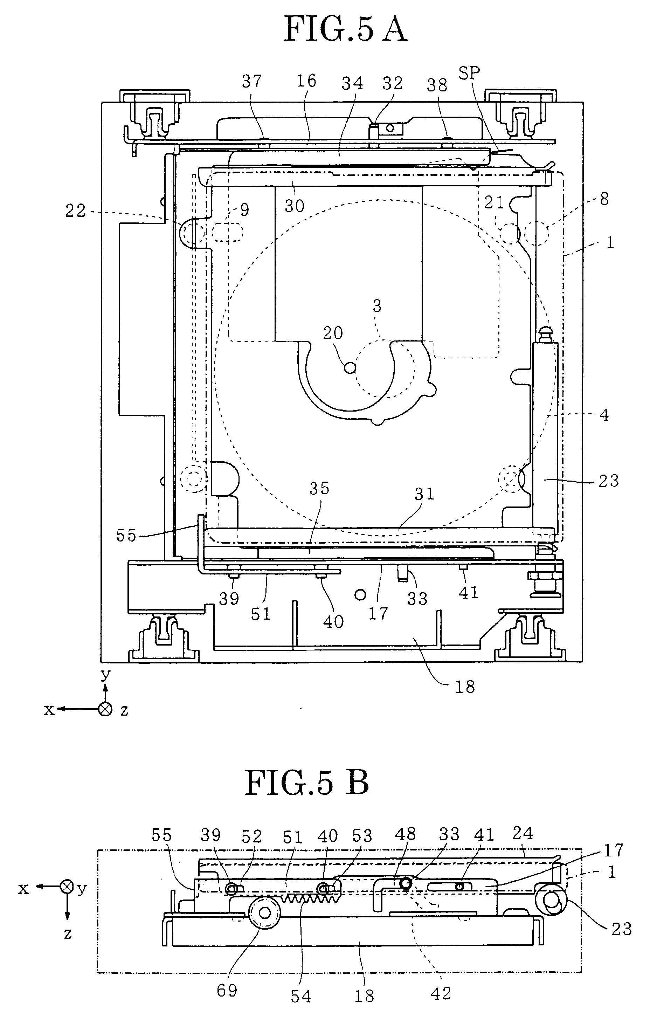

The loading operation of the cartridge transporting mechanism 10 made according to the present embodiment will be described with reference to Figs. 5 - 8.

As shown in Fig. 5A and 5B, prior to the insertion of the cartridge 1 into the MD display, the rack member 51 is moved rightwardly in Fig. 5B to an extent allowable by a relative relationship between the engaging projections 39, 40 and the elongate holes 52, 53. Then, through a restricting effect by virtue of the engaging projections 33, 39, 40, 41 and the elongate holes 45, 46, 47 and L-shaped hole 48, the cartridge holder 24 and the steering structure 25 are moved to the rightmost position with respect to the second side plate 17.

In this way, when the cartridge 1 is inserted horizontally from the outside of the rod-like roller 23 (corresponding to a cartridge insertion opening) into the cartridge holder 24, and is pushed further inwardly against the spring force of the leaf spring SP, the rod-like roller 23 will get in contact with the back surface of the cartridge 1, thereby automatically transporting the cartridge 1 deep into the cartridge holder 24.

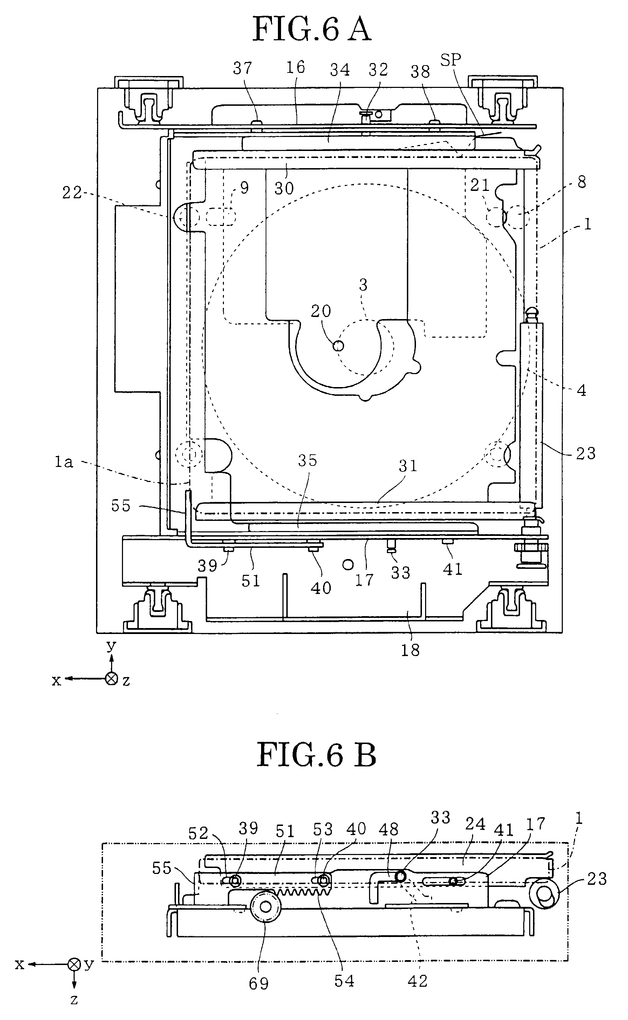

Subsequently, as shown in Figs. 6A and 6B, the front portion 1a of the cartridge 1 gets in contact with the engaging portion 55 of the rack member 51, thereby causing the rack member 51 to be moved leftwardly in Fig. 6. Namely, the rack member 51 is caused to move as leftwardly as allowed by a relative relationship between the engaging projections 39, 40 and the elongate holes 52, 53.

Once the rack member 51 is moved in the above manner, the rack portion 54 of the rack member 51 will become engaged with the gear 69 being rotated in the forward direction by virtue of a driving force from the driving motor 56. In this way, the rack member 51 will be pulled so as to be moved further leftwardly in Fig. 6B.

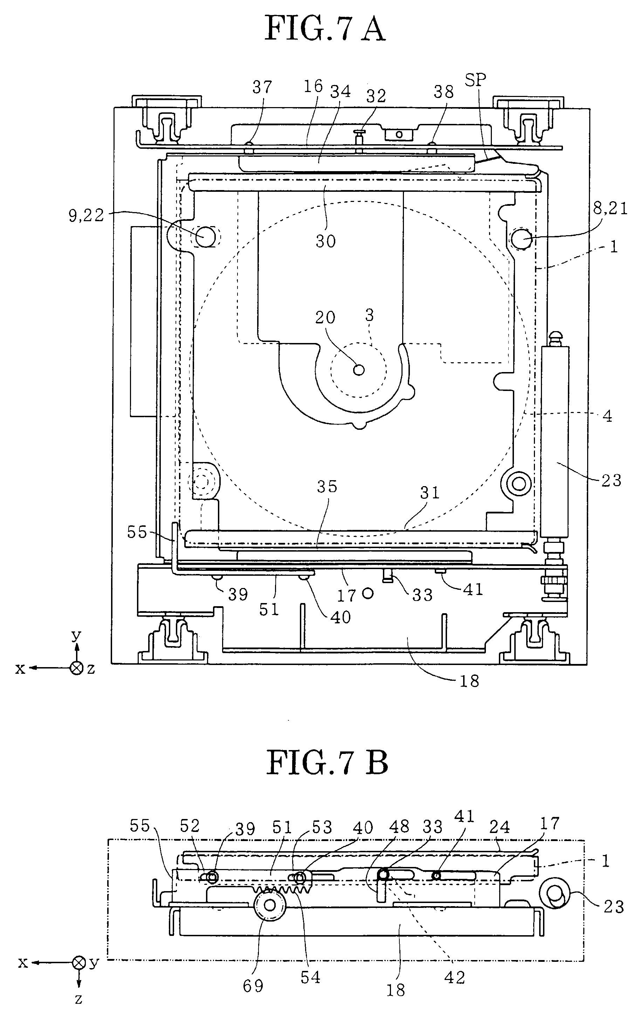

At this moment, as shown in Fig. 7A and 7B, when the rack member 51 is moved leftwardly by the gear 69, the engaging projections 39, 40 (engaged in the elongated holes 52, 53) will also be moved toward the left, thereby causing the steering structure 25 to move to the left. Further, since the engaging projection 33 (engaged in both the inclined, guide hole 42 of the second arm 35 and the L-shaped guide hole 48 of the second side plate 17) is moved leftwardly together with the steering structure 25, the cartridge holder 24 will also be moved leftwardly in the same direction.

In this way, the cartridge holder 24 is allowed to be moved leftwardly in a horizontal plane until the engaging projection 33 arrives at the leftmost position of the inclined guide hole 42 and the L-shaped guide hole 48. Accordingly, the cartridge 1 mounted on the cartridge holder 24, may be transported to a position rightly above the turn table within the disc player.

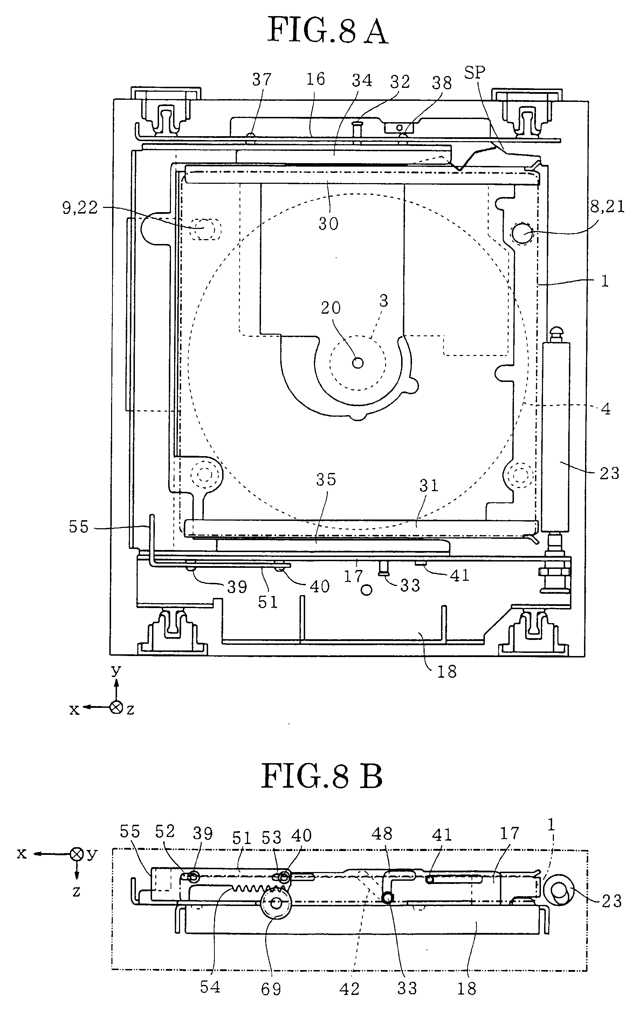

Afterwards, as shown in Figs. 8A and 8B, if the rack member 51 is moved further toward the left by virtue of the gear 69, only the steering structure 25 will be continually moved toward the left, while the engaging projection 33 is caused to move along the inclined guide hole 42 and the L-shaped guide hole 48, thus moving downwardly in z direction. Therefore, the cartridge holder 24 will be forced to move toward the bottom wall of the frame structure 11, and be mounted on the turn table with the clamping area 3 being coincident with the rotating center 20 of the turn table. At this time, since the positioning projections 21 and 22 will be engaged in the positioning holes 8 and 9 formed on the back surface of the cartridge 1, the MD cartridge 1 may be mounted on a predetermined recording/reproducing position within the disc player with a high precision.

Then, once the completion of the mounting of the cartridge 1 is detected by a micro-switch, an electricity supply to the motor 56 is stopped, thereby allowing the start of information recording or reproducing effected on the recording/reproducing medium 4 (such as an MD).

Meanwhile, the above operations are similarly performed on the other side (including the first side plate 16, side wall 28 of the cartridge holder 24, the first arm 34 of the steering structure 25) of the cartridge transporting mechanism 10, and the similar descriptions are omitted hereby.

Next, an unloading operation of the cartridge transporting mechanism 10 will be described in the following with reference to Figs. 8 - 5.

At first, as shown in Figs. 8A and 8B, under a condition where the cartridge 1 is mounted on the recording/reproducing position, a switch (not shown) for starting the unloading operation is turn ON, an electricity supply for effecting an adverse rotation of the motor 56 is started, so that the adverse rotation of the motor 56 will cause the gear 69 and the rod-like roller 23 to rotate in an adverse direction.

With the adverse rotation of the gear 69, the rack member 51 will be moved rightwardly and this causes the steering structure 25 also to move rightwardly. In this way, the engaging projection 33 is caused to move along the inclined guide hole 42 and the L-shaped guide hole 48, thus moving upwardly in z direction. In this way, the cartridge holder 24 may be moved upwardly so as to arrive at a condition shown in Figs. 7A and 7B.

Then, with the adverse rotation of the gear 69, the rack member 51 and the steering structure 25 are moved further rightwardly, thereby causing the engaging projection 33 to move rightwardly still further along the L-shaped guide hole 48, so as to arrive at a condition shown in Figs. 6A and 6B where the cartridge holder 24 is in its possibly rightmost position.

Afterwards, as shown in Figs. 5A and 5B, when the gear 69 is separated from the rack portion 54 of the rack member 51, the rightward movement of the steering structure 25 and the cartridge holder 24 will be stopped.

Here, as shown in Figs. 8 - 6, during a time period while the gear 69 is forcing the rack member 51 to move rightwardly, the engaging portion 55 is pushing the front end 1a of the MD cartridge 1 in the rightward direction, so that the cartridge 1 is automatically moved toward the cartridge insertion opening of the disc player.

In this way, with the use of the above embodiment of the present invention, since there is provided a rod-like roller 23 capable of getting in contact with the back surface of the MD cartridge 1 with a large contact area, it is sure to transport the cartridge 1 in a more stabilized manner. Further, since a contact area between the rod-like roller 23 and the back surface of the MD cartridge 1 is large, it is allowed to reduce the abrasion on the contact surface of the rod-like roller 23, Moreover, since the MD cartridge 1 is allowed to be transported without having its sliding shutter 6 touched by the rod-like roller 23, it is sure to prevent a problem that the recording/reproducing medium is wounded if the sliding shutter 6 is opened during the transporting of the cartridge 1.

As a result, it is sure to transport the cartridge 1 in a more stabilized manner with an improved precision.

In conclusion, with the use of the present invention, when the MD cartridge is being inserted into the disc player, the cartridge may get in continuous contact with the rod-like roller which can rotate continuously, thereby allowing the cartridge to smoothly move into the cartridge holder. Then, the cartridge holder moving mechanism is used to transport the cartridge holder with the cartridge thereon, so that the cartridge may be at first moved to a first position corresponding to but slight apart from the recording/reproducing position and then to the recording/reproducing position, thereby ensuring that the MD cartridge is allowed to move to the recording/reproducing position exactly and reliably with a high precision.

While the presently preferred embodiments of the this invention have been shown and described above, it is to be understood that these disclosures are for the purpose of illustration and that various changes and modifications may be made without departing from the scope of the invention as set forth in the appended claims.

## Claims

1. A cartridge transporting mechanism (10) for use in an information recording/reproducing apparatus, said cartridge transporting mechanism (10) being adapted to transport a cartridge (1) accommodating an information recording medium from a cartridge insertion opening of the apparatus to a recording/reproducing position within the apparatus, said cartridge transporting mechanism (10) comprising:
a cartridge holder (24) for carrying the cartridge (1) and for moving between the cartridge insertion opening and the recording/reproducing position;
a roller means (23) capable of rotating in a predetermined direction in contact with the cartridge (1), so as to move the cartridge (1) from the cartridge insertion opening to the cartridge holder (24); and
a cartridge holder (24) moving mechanism for moving the cartridge holder (24) between the cartridge insertion opening and the recording/reproducing position,
wherein said cartridge holder (24) moving mechanism is adapted to move the cartridge holder (24) with the cartridge (1) thereon to a first position which is slightly apart from the recording/reproducing position, and then to a second position which is the recording/reproducing position.

2. The cartridge transporting mechanism (10) according to Claim 1, wherein the cartridge holder (24) moving mechanism is adapted to move the cartridge holder (24) with the cartridge (1) thereon in a direction away from the roller means (23).

3. The cartridge transporting mechanism (10) according to Claim 1, wherein the roller means (23) begins to rotate at a time the cartridge (1) gets to the cartridge insertion opening, and stops its rotation at a time the cartridge holder (24) with the cartridge (1) thereon arrives at the recording/reproducing position.

4. The cartridge transporting mechanism (10) according to Claim 1, wherein a single one driving source (56) is employed to effect both the rotation of the roller means (23) and the movement of the cartridge holder (24) to the first position which is slightly apart from the recording/reproducing position.

5. The cartridge transporting mechanism (10) according to Claim 1, wherein the cartridge (1) is provided with a shutter means (6) for partially exposing the recording/reproducing medium, the roller means (23) is adapted to contact the cartridge (1) except said shutter means (6).

6. The cartridge transporting mechanism (10) according to Claim 1 ,wherein the cartridge holder (24) moving mechanism comprises:
a steering structure (25) including a first arm (34) and a second arm (35), said second arm (35) having an inclined guide hole (42) ;
a fixed side plate having an L-shaped guide hole (48) including a first elongate hole (48a) arranged in the cartridge insertion direction and a second elongate hole (48b) arranged in a direction perpendicular to the cartridge insertion direction;
an engaging projection (37-44) formed on the cartridge holder (24), capable of engaging into the inclined guide hole (42) and the L-shaped guide hole (48) ;
a rack member (51) adapted to move the steering structure (25) in the cartridge insertion direction;
when the steering structure (25) is moved in the cartridge insertion direction, there will be a relative displacement between the inclined guide hole (42) and the L-shaped hole (48), causing a movement of the engaging projection, thereby enabling the cartridge holder (24) with the cartridge (1) thereon to move between the cartridge insertion opening and the recording/reproducing position.
